# EUROPEAN PATENT SPECIFICATION

(11) **EP 1 725 411 B1**
(45) Date of publication and mention of the grant of the patent: **08.01.2014**
(21) Application number: 05716922.9
(22) Date of filing: 04.03.2005
(51) Int. Cl.: B60B 33/00

(54) **DYNAMIC SUPPORT MEANS FOR APPLIANCES SUCH AS REFRIGERATORS, FREEZERS AND THE LIKE**
DYNAMISCHE TRANSPORTVORRICHTUNG FÜR GERÄTE SO WIE KÜHLSCHRÄNKE, TIEFKÜHLER UND DERGLEICHEN
ORGANES SUPPORTS DYNAMIQUES POUR DES MATERIELS TELS QUE LES REFRIGERATEURS, LES CONGELATEURS, ET ANALOGUES

(30) Priority: 16.03.2004 IT MI20040106 U
(43) Date of publication of application: 29.11.2006
(73) Proprietor: WHIRLPOOL CORPORATION, Benton Harbor Michigan 49022 (US)
(72) Inventor: RIBOLZI, Augusto Whirlpool Europe s.r.l., I-21025 Comerio (IT); GIRARDELLO, Andrea Whirlpool Europe s.r.l., I-21025 Comerio (IT)
(74) Representative: Guerci, Alessandro
(86) International application number: PCT/EP2005/050982
(87) International publication number: WO 2005/090099

(56) References cited:
- DE-A1- 2 504 473
- FR-A- 2 754 796
- PATENT ABSTRACTS OF JAPAN vol. 1997, no. 07, 31 July 1997 (1997-07-31) -& JP 09 056525 A (MATSUZAWA KUNIO), 4 March 1997 (1997-03-04)
- PATENT ABSTRACTS OF JAPAN vol. 2003, no. 11, 5 November 2003 (2003-11-05) -& JP 2003 200703 A (DAIWA SANGYO KK), 15 July 2003 (2003-07-15)

## Description

The present invention relates to a dynamic support means for appliances such as refrigerators, freezers and the like in accordance with the introduction to the main claim.

**A dynamic support means of this kind is disclosed by** DE 2504473 A1 **even if not with reference to a use for domestic appliances.**

**Moreover, the construction of this known device is entirely of metal.**

On particular occasions heavy appliances such as refrigerators, freezers and the like need to be moved from the position in which they habitually lie.

This operation is often difficult as generally these appliances are provided only with static support means such as feet or the like, generally four in number. Such movement is even more difficult when the appliances are full.

The known art has solved this problem by providing the heavier and more costly appliances with at least one pair of fixed axis rollers disposed generally at the rear of their base. However the usual static feet remain at the front. Hence, by lifting the front of the appliance its weight is almost totally discharged onto the rear rollers, so simplifying movement.

The fixed axis rollers have however the considerable drawback of urging the appliance to move along only one direction, hence not allowing easy movement in other directions.

Another drawback is that fixed axis rollers cannot be adjusted in height at will. Hence they cannot compensate for any level differences in the support surface, making the appliance unstable.

Height adjustable casters do however exist; these dynamic support means present a vertical rotation axle offset from the point at which the caster rests on the ground. In this manner, within the support means a moment is generated that tends to considerably stress the material of which the vertical rotation axle is constructed. The greater the weight acting on the support means, the greater the stress on the axle. In the case of appliances such as freezers and refrigerators the weight is such that very strong materials such as steel would have to be used. The use of such means is therefore not desirable given that it would considerably influence the overall production cost of the appliance.

An object of the present invention is therefore to provide a dynamic support means for appliances such as freezers, refrigerators and the like which represents an improvement over the known art, in the sense that it is able to withstand the weight of such appliances while being of plastic construction, and is of variable orientation.

Another object of the present invention is to provide a dynamic support means for appliances such as freezers, refrigerators and the like which is swivel-mounted, is height-adjustable, is simple from the constructional viewpoint, and is reliable.

This and further objects are attained by a dynamic support means for appliances such as freezers, refrigerators and the like in accordance with the technical teachings of the accompanying claims.

Further characteristics and advantages of the invention will be apparent from the description of a preferred but non-exclusive embodiment of the dynamic support means for appliances such as freezers, refrigerators and the like, illustrated by way of non-limiting example in the accompanying drawings, in which:
Figure 1 is a side view of an orientatable and height-adjustable support means according to the present invention;
Figure 2 is a section on the line 2-2 of Figure 1;
Figure 3 is a perspective view of the support means of Figure 1; and
Figure 4 is an exploded view of the invention.

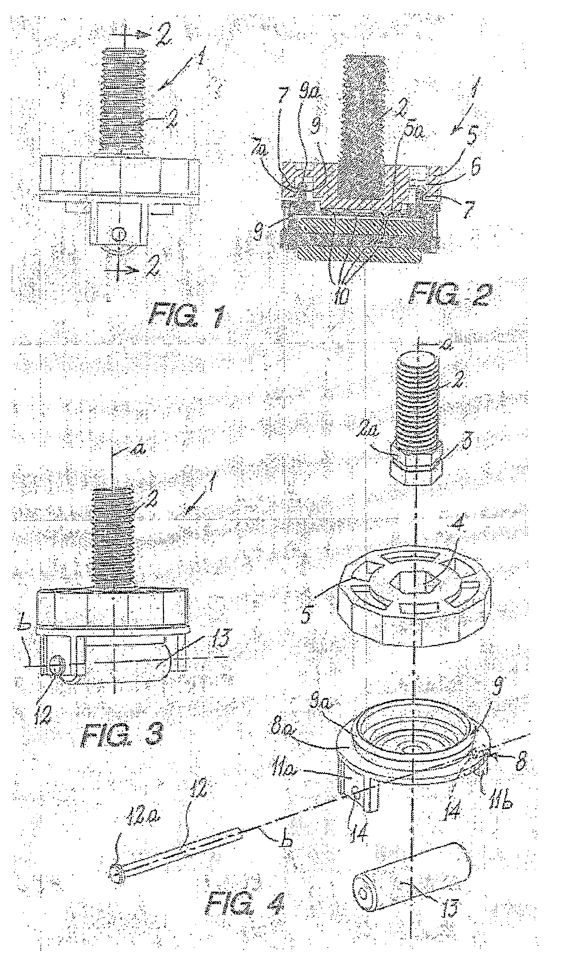

With reference to Figure 1, this shows the dynamic support means of the present invention, indicated overall by 1.

It comprises a threaded screw 2 cooperating with a known lead nut (not shown) rigid with the appliance base. This screw 2 presents a head 2a, for example hexagonal, in which a groove is present laterally to cause the polymer material to better adhere when injected about the screw head. When in use, the head 2a is housed in a seat 4 of a stationary element 5, the shape of the seat 4 (in the illustrated example shown hexagonal) mirrors that of the head 2a in order to prevent mutual rotation between the two parts. The seat 4 and head 2a are bonded together by co-moulding. In its lower face, the stationary element 5 presents an annular groove 6 provided with a facilitation step 7, possibly discontinuous.

The annular groove 6 and facilitation step 7 cooperate with an annular appendix 9, also provided with an externally projecting step 9a and projecting from the upper face 8a of a rotary element 8. The flare 7a of the facilitation step 7 is particularly useful in assembling the components, and in particular when elastically snap-fitting the annular appendix 9 into the annular groove 6.

The annular appendix 9, the annular groove 6 and the respective steps 7, 9a cooperate to mutually centre and secure the stationary element 5 and rotary element 8, in order to enable it to rotate relatively about the geometrical axis "a" of the screw 2. Annular projections 10, preferably of self-lubricating material, preferably teflon, present on the bottom face of the rotary element 8, reduce friction by sliding on the lower face 5a of the stationary element 5, to enable mutual rotation even if loaded by a large weight.

Finally, the rotary element 8 presents a pair of parallel projecting holed cheeks 11 a and 11 b for confining and supporting a shaft 12 about which a floor contacting roller 13 rotates. The shaft 12 is inserted with light interference into the holes 14, the roller 13 rotating idly on it. The shaft can be retained by a split pin mounted in a groove, not shown, of said shaft, in a position opposite the relative head 12a.

The swivel axis (a) of the rotary element 8 (axis coinciding with that of the screw 2) intersects perpendicularly the rotation axis (b) of the roller 13, at its centre.

The operation of the invention is apparent from the description, the height of the support means being adjusted by rotating the screw 2 by acting for example manually on the stationary element 5, rotation of the roller 13 about the vertical axis "a" being obtained by mutual rotation of the stationary element 5 and rotary element 8.

A support means conceived in this manner is particularly advantageous as the weight distributed on the floor via the roller 13 generates no moment within the support means itself, the support means hence being stressed mainly by compression. This is particularly advantageous as such a support means can be of small dimensions and constructed entirely of engineering polymer, such as ABS.

A preferred embodiment has been illustrated, however others can be conceived using the same inventive concept.

## Claims

1. A dynamic support means for household electrical appliances such as refrigerators, freezers or the like, comprising a support roller (13) presenting a horizontal rotation axis (b) arranged to rotate about a vertical swivel axis (a) perpendicular to it, said rotation axis (b) and said swivel axis (a) intersecting each other, the support comprising a rotary element (8) for supporting said roller (13) and a stationary element (5) rigid with the appliance, said elements rotating mutually about said swivel axis (a), said rotation element (8) presenting an annular appendix (9) arranged to cooperate with an annular groove (6) of said stationary element (5) to centre the two elements (5, 8), **characterised in that** the support is of plastic construction and **in that** said annular groove (6) and said annular appendix (9) present respective steps (7, 9a) for elastic constraint between the rotary element (8) and stationary element (5) where step (7) comprises a flare (7a), and **in that** the annular appendix (9) is assembled into the annular groove (6) by elastically snap-fitting.

2. A dynamic support means as claimed in claim 1, **characterised by** presenting screw means (2) for adjusting the height of said support roller (13).

3. A support means as claimed in claim 1, **characterised in that** said step (7) of said annular groove (6) is discontinuous.

4. A means as claimed in claim 1, **characterised in that** projections (10) of self-lubricating material are present between the stationary element (5) and the rotation element (8).

5. A means as claimed in claim 4, **characterised in that** said self-lubricating material is teflon.

6. A means as claimed in claim 1, **characterised in that** said support roller (13) rotates idly about a shaft (12) engaged in holes (14) provided in projections extending lowerly from said rotation element (8).

## Patentansprüche

1. Dynamisches Auflagemittel für elektrische Haushaltsgeräte, wie zum Beispiel Kühlschränke, Gefriergeräte oder dergleichen, das eine Auflagerolle (13) umfasst, die eine horizontale Rotationsachse (b) bereitstellt, die angeordnet ist, um eine vertikale Schwenkachse (a) senkrecht dazu zu rotieren, wobei sich die Rotationsachse (b) und die Schwenkachse (a) einander schneiden, wobei die Auflage ein rotierendes Element (8) zum Tragen der Rolle (13) und ein stationäres Element (5) starr mit dem Gerät umfasst, wobei die Elemente um die Schwenkachse (a) gegenseitig rotieren, wobei das Rotationselement (8) einen ringförmigen Ansatz (9) bereitstellt, der angeordnet ist, um mit einer ringförmigen Nute (6) des stationären Elements (5) zusammenzuwirken, um die beiden Elemente (5, 8) zu zentrieren, **dadurch gekennzeichnet, dass** die Auflage aus einer Kunststoffkonstruktion besteht und dass die ringförmige Nute (6) und der ringförmige Ansatz (9) entsprechende Stufen (7, 9a) zur elastischen Einschränkung zwischen dem rotierenden Element (8) und dem stationären Element (5) bereitstellen, wobei die Stufe (7) eine Aufweitung (7a) umfasst, und dass der ringförmige Ansatz (9) in der ringförmigen Nute (6) durch elastische Schnappbefestigung eingesetzt ist.

2. Dynamisches Auflagemittel nach Anspruch 1, **gekennzeichnet durch** das Bereitstellen eines Schraubmittels (2) zum Verstellen der Höhe der Auflagerolle (13).

3. Dynamisches Auflagemittel nach Anspruch 1, **dadurch gekennzeichnet, dass** die Stufe (7) der ringförmigen Nute (6) diskontinuierlich ist.

4. Dynamisches Auflagemittel nach Anspruch 1, **dadurch gekennzeichnet, dass** Vorsprünge (10) aus selbstschmierendem Material zwischen dem stationären Element (5) und dem Rotationselement (8) bereitgestellt werden.

5. Mittel nach Anspruch 4, **dadurch gekennzeichnet, dass** das selbstschmierende Material Teflon ist.

6. Mittel nach Anspruch 1, **dadurch gekennzeichnet, dass** die Auflagerolle (13) im Leerlauf um eine Welle (12) rotiert, die in Löchern (14) eingerastet ist, die in Vorsprüngen vorgesehen sind, die sich vom Rotationselement (8) nach unten erstrecken.

## Revendications

1. Organe de support dynamique pour appareils électroménagers tels que réfrigérateurs, congélateurs et similaires, comprenant un galet support (13) présentant un axe de rotation horizontal (b) agencé pour tourner autour d'un axe de pivotement vertical (a) qui lui est perpendiculaire, ledit axe de rotation (b) et ledit axe de pivotement (a) se croisant, le support comprenant un élément de rotation (8) pour supporter ledit rouleau (13) et un élément fixe (5) rigide avec l'appareil, lesdits éléments tournant mutuellement autour dudit axe de pivotement (a), ledit élément de rotation (8) présentant un appendice annulaire (9) agencé pour coopérer avec une rainure annulaire (6) dudit élément fixe (5) pour centrer les deux éléments (5, 8), **caractérisé en ce que** le support est en plastique et **en ce que** ladite rainure annulaire (6) et ledit appendice annulaire (9) présentent des paliers respectifs (7, 9a) pour une contrainte élastique entre l'élément de rotation (8) et l'élément fixe (5) où le palier (7) comprend un évasement (7a), et **en ce que** l'appendice annulaire (9) est assemblé dans la rainure annulaire (6) par emboîtage élastique.

2. Organe de support dynamique selon la revendication 1, **caractérisé en ce qu'**il présente un organe de vissage (2) pour ajuster la hauteur dudit galet support (13).

3. Organe de support selon la revendication 1, **caractérisé en ce que** ledit palier (7) de ladite rainure annulaire (6) est discontinu.

4. Organe selon la revendication 1, **caractérisé en ce que** des projections (10) d'un matériau autolubrifiant sont présentes entre l'élément fixe (5) et l'élément de rotation (8).

5. Organe selon la revendication 4, **caractérisé en ce que** ledit matériau autolubrifiant est le téflon.

6. Organe selon la revendication 1, **caractérisé en ce que** ledit galet support (13) tourne librement autour d'un arbre (12) engagé dans des orifices (14) aménagés dans les projections s'étendant vers le bas depuis l'élément de rotation (8).
